# EUROPÄISCHE PATENTSCHRIFT

(11) **EP 2 208 102 B1**
(45) Veröffentlichungstag und Bekanntmachung des Hinweises auf die Patenterteilung: **09.03.2011**
(21) Anmeldenummer: 08802225.6
(22) Anmeldetag: 16.09.2008
(51) Int. Cl.: G02B 21/24

(54) **BEDIENEINRICHTUNG FÜR DEN FOKUSSIERTRIEB EINES MIKROSKOPS**
OPERATING DEVICE FOR THE FOCUSING OPERATION OF A MICROSCOPE
DISPOSITIF DE COMMANDE POUR LE MÉCANISME DE FOCALISATION D'UN MICROSCOPE

(30) Priorität: 25.09.2007 DE 102007045669
(43) Veröffentlichungstag der Anmeldung: 21.07.2010
(73) Patentinhaber: Carl Zeiss MicroImaging GmbH, 07745 Jena (DE)
(72) Erfinder: SCHADWINKEL, Harald, 30161 Hannover (DE); WAHL, Hubert, 07646 Stadtroda (DE); BECKER, Klaus, 37339 Breitenworbis (DE); KNUPFER, Klaus, 73457 Essingen (DE); NOLTE, Frank, 37120 Bovenden (DE)
(74) Vertreter: Scholze, Humbert
(86) Internationale Anmeldenummer: PCT/EP2008/007691
(87) Internationale Veröffentlichungsnummer: WO 2009/040012

(56) Entgegenhaltungen:
- EP-A- 1 416 308
- WO-A-2004/055572
- DE-U1- 8 715 891
- JP-A- 2001 042 229
- JP-A- 2002 090 649
- US-A- 5 557 456

## Beschreibung

Die Erfindung bezieht sich auf eine Bedieneinrichtung für den Fokussiertrieb eines Mikroskops, ausgestattet mit Drehknöpfen, die eine Bewegung der Finger oder der Hand eines Bedieners aufnehmen und über Getriebeglieder in eine Änderung der Fokusposition relativ zu einer zu beobachtenden Probe wandeln.

Beim Mikroskopieren ist das Einstellen der optimalen Fokusposition häufig die erste und wichtigste Interaktion des Bedieners mit dem Mikroskop. Dabei wird in der Regel mit einer entsprechenden Finger- oder Handbewegung ein Bedienelement betätigt, dadurch eine Einstellbewegung ausgelöst und diese Einstellbewegung auf ein Fokussierelement übertragen, beispielsweise auf das Mikroskopobjektiv, auf einen Objektivrevolver, den Probentisch, eine Tubuslinse oder einen Zwischentubus.

Es ist bekannt, zur Übertragung der Einstellbewegung vom Bedienelement auf das betreffende Fokussierelement ausschließlich mechanische Getriebeglieder vorzusehen.

Alternativ zu dieser klassischen Variante ist es bekannt, die manuell ausgelöste Bewegung des Bedienelementes, insbesondere eines Drehknopfes, zunächst in elektrische Signale zu wandeln und diese einer elektronischen Ansteuerschaltung zuzuführen, die mit einem Antriebsmotor in Verbindung steht, und erst nachfolgend die mit dem Antriebsmotor erzeugte Bewegung über Getriebeglieder auf das Fokussierelement zu übertragen.

In dieses Sachgebiet der motorischen Fokussierung ist die nachfolgend näher beschriebene Erfindung einzuordnen.

Motorische Fokussierungen sind vor allem bei Mikroskopen üblich, die für anspruchsvolle Forschungsanwendungen zum Einsatz kommen und bei denen es darum geht, verschiedene Fokuspositionen mit hoher Wiederholgenauigkeit im SubMikrometerbereich anzufahren. Darüber hinaus bietet die motorische Fokussierung auch im Bereich industrieller und biomedizinischer Anwendungen Vorteile, einmal wiederum im Hinblick auf präzise zu wiederholende Fokuseinstellungen, zum anderen auch wegen der damit gegebenen Möglichkeit, die Fokussiergeschwindigkeit an eine jeweils eingestellte Vergrößerung des Mikroskops zu koppeln.

In diesem Zusammenhang sind Bedieneinrichtungen bekannt, die mit zwei Bedienelementen in Form von Drehknöpfen ausgestattet sind, von denen einer zur manuellen Auslösung einer Grobverstellung und der andere zu manuellen Auslösung einer Feinverstellung bei der Fokussierung bestimmt ist.

JP2002090649 beschreibt ein Bedienelement eines Mikroskops zur Änderung der Fokussierung. Das Bedienelement besitzt interne Mittel zur mechanischen Umschaltung von einer geringen zu einer hohen Fokussiergeschwindigkeit. Nachteilig hierbei ist, dass die mechanischen Schaltmittel einem relativ hohen mechanischen Vergleich unterliegen.

Da die Einstellung der Fokusposition eine zwar manuelle, so doch feinfühlige und präzise Bewegung erfordert, ist dem Bediener ein ermüdungsfreies Arbeiten zu ermöglichen.

Bei der Entwicklung und Ausgestaltung entsprechender Bedieneinrichtungen besteht daher stets die Forderung, sowohl die individuellen Bedürfnisse des Bedieners zu berücksichtigen, als auch funktionsgerechte und kostengünstige Ausführung zu erzielen.

Davon ausgehend liegt der Erfindung die Aufgabe zugrunde, eine Bedieneinrichtung der eingangs genannten Art zu schaffen, die sowohl unter ergonomischen Gesichtspunkten als auch im Hinblick auf sichere Funktion und kostengünstige Herstellbarkeit optimiert ist.

Erfindungsgemäß wird diese Aufgabe mit Bedieneinrichtung für den Fokussiertrieb eines Mikroskops der eingangs beschriebenen Art durch die Merkmale des Patentanspruchs 1 gelöst. Vorteilhafte Ausgestaltungen sind in den Unteransprüchen 2 bis 6 angegeben.

In die Erfindung eingeschlossen ist selbstverständlich auch die umgekehrte Ausgestaltung, bei welcher bei geringerem Abstand von dem betreffenden Drehknopf die Ansteuerschaltung in Abhängigkeit von dem mit beiden Drehknöpfen vorgegebenen Drehwinkel eine Feinverstellung bzw. bei einem größeren Abstand von dem betreffenden Drehknopf die Ansteuerschaltung eine Grobverstellung generiert.

Der Annäherungsschalter kann ein kapazitiver, optischer oder auch nach anderweitig vorstellbaren Prinzipien arbeitender Sensor sein.

Auch die Ausführung des Umschalters als Berührungsschalter ist denkbar und liegt im Rahmen der Erfindung.

In einer bevorzugten Variante ist beispielsweise der Annäherungsschalter dem Drehknopf mit einem kleineren Durchmesser zugeordnet und die Ansteuerschaltung so ausgelegt, dass beim Überdecken dieses Drehknopfes mit der Hand oder mit Fingern der Hand die Ansteuerschaltung in Abhängigkeit von einem mit beiden Drehknöpfen vorgegebenen Drehwinkel eine Grobverstellung der Fokusposition generiert.

Damit wird mit der gezielten Betätigung des Annäherungs- oder auch eines Berührungsschalters eine Umschaltung beider Drehknöpfe zur gemeinsamen Benutzung wahlweise entweder zum Zweck einer Fein- oder zum Zweck einer Grobverstellung bewirkt.

Es ist auch denkbar, dass
- mindestens einer der beiden Drehknöpfe axial zwischen zwei Endlagen verschiebbar ist, und
- der Umschalter als Endlagenschalter ausgebildet und einer dieser Endlagen zugeordnet ist,
- so dass bei einer axialen Verschiebung eines oder beider Drehknöpfe und einer mit dieser Verschiebung ausgelösten Betätigung des Endlagenschalters die Ansteuerschaltung in Abhängigkeit von dem mit beiden Drehknöpfen vorgegebenen Drehwinkel eine Grobverstellung der Fokusposition generiert, und
- bei nicht betätigtem Endlagenschalter die Ansteuerschaltung in Abhängigkeit von dem mit beiden Drehknöpfen vorgegebenen Drehwinkel eine Feinverstellung der Fokusposition generiert.

Auch hier ist die umgekehrte Ausführung möglich, bei welcher bei einer axialen Verschiebung eines oder beider Drehknöpfe und damit betätigtem Endlagenschalter die Ansteuerschaltung eine Feinverstellung und bei nicht betätigtem Endlagenschalter die Ansteuerschaltung eine Grobverstellung generiert, wobei der Verstellweg jeweils in Abhängigkeit von dem Drehwinkel vorgegeben wird.

Bei der zweiten denkbaren Ausgestaltung kann in unterschiedlichen Varianten vorgesehen sein, dass entweder beide Drehknöpfe axial verschiebbar und damit zur Betätigung des Endlagenschalters vorgesehen sind, oder nur einer der beiden Drehknöpfe axial verschiebbar und so zur Betätigung des Endlagenschalters vorgesehen ist.

Mit der ersten wie auch mit der zweiten, denkbaren Ausgestaltung wird durch eine in einfacher Weise ausgelöste Betätigung des Umschalters eine Umschaltung zwischen einer Fein- oder einer Grobverstellung bei Drehung der Drehknöpfe bewirkt.

Bei allen vorstehend beschriebenen Ausgestaltungen sind die beiden Drehknöpfe bevorzugt mit unterschiedlichen Durchmessern ausgeführt, wobei der Drehknopf mit dem kleineren Durchmesser der Feinverstellung und der Drehknopf mit dem größeren Durchmesser der Grobverstellung zugeordnet ist. Selbstverständlich liegt auch eine umgekehrte Ausgestaltung im Rahmen der Erfindung, bei welcher der Drehknopf mit dem kleineren Durchmesser der Grobverstellung zugeordnet ist.

Weiterhin kann vorgesehen sein, dass mindestens eine der erfindungsgemäßen Bedieneinrichtungen
- entweder ausgebildet ist als separate, vom Mikroskop oder Mikroskopstativ losgelöste und damit neben dem Mikroskop frei positionierbare Baugruppe, wobei diese Baugruppe die beiden Drehknöpfe und den Drehwinkelgeber umfasst, während die Ansteuerschaltung, der Antriebsmotor und die Getriebeglieder im Mikroskopstativ untergebracht sind,
- oder fest oder beliebig variabel an einem vorgegebenen Ort am Mikroskop angeordnet ist, während die Ansteuerschaltung, der Antriebsmotor und die Getriebeglieder im Mikroskopstativ untergebracht sind.

Hierdurch sind Ausgestaltungsvarianten eingeschlossen, bei denen beispielsweise eine der erfindungsgemäßen Bedieneinrichtungen an einem vorgegebenen Ort fest mit dem Mikroskop verbunden ist, eine der Bedieneinrichtungen beliebig variabel neben dem Mikroskop positioniert ist, mehrere der Bedieneinrichtungen an verschiedenen Orten fest mit dem Mikroskop verbunden sind, oder mehrere der Bedieneinrichtungen beliebig variabel neben dem Mikroskop positioniert sind.

Die Signalübertragung zwischen der Ansteuerschaltung und dem Antriebsmotor kann dabei jeweils über drahtgebundene oder drahtlose Wege vorgenommen werden.

Wird eine drahtgebundene Signalübertragung gewählt, kann diese vorteilhaft über Steckverbinder erfolgen, so dass sich die Verbindung in einfacher Weise herstellen und auch wieder auftrennen lässt. Dies gilt für alle vorstehend aufgeführten Ausgestaltungsvarianten der Positionierung einer oder mehrerer Bedieneinrichtungen relativ zum Mikroskopkörper.

Die Erfindung soll nachfolgend anhand von Ausführungsbeispielen näher erläutert werden. In den zugehörigen Zeichnungen zeigen:
- Fig.1: eine am Mikroskopstativ angeordnete Bedieneinrichtung mit zwei koaxialen Drehknöpfen, die gegeneinander nicht verdrehbar sind, ausgestattet mit einem mit der Ansteuerschaltung in Verbindung stehenden Annäherungsschalter,
- Fig.2: eine am Mikroskopstativ angeordnete Bedieneinrichtung mit zwei koaxialen Drehknöpfen, die gegeneinander nicht verdrehbar sind, ausgestattet mit einem mit der Ansteuerschaltung in Verbindung stehenden, einem der Drehknöpfe zugeordneten Endlagenschalter.
- Fig.3: eine am Mikroskopstativ angeordnete Bedieneinrichtung mit zwei koaxialen Drehknöpfen, die gegeneinander nicht verdrehbar sind, ausgestattet mit einem mit der Ansteuerschaltung in Verbindung stehenden, beiden Drehknöpfen zugeordneten Endlagenschalter.

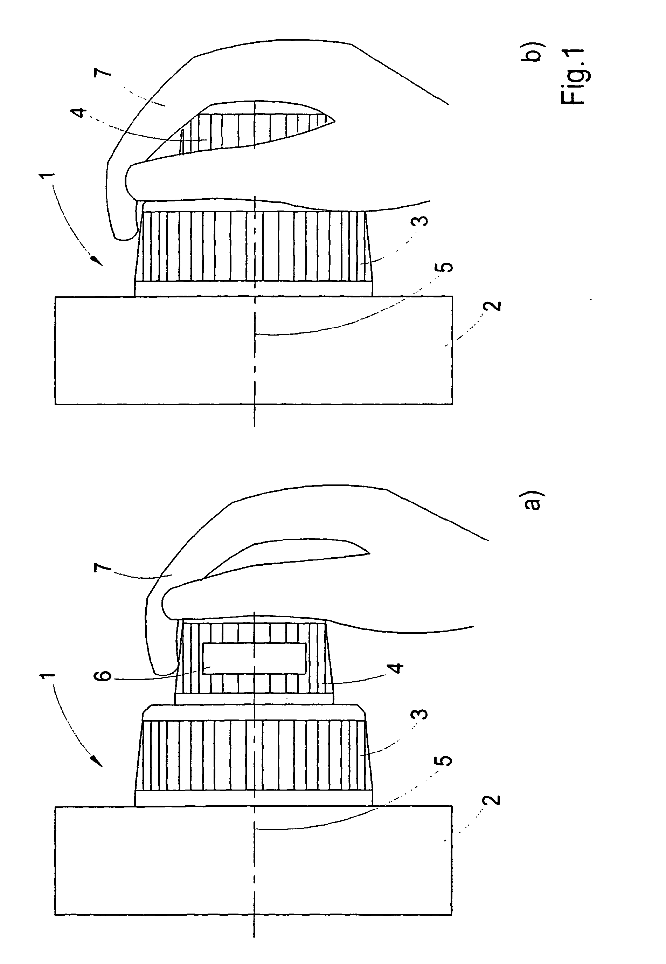

In Fig.1 ist eine am Mikroskopstativ 2 angeordnete Bedieneinrichtung 1 dargestellt, die mit zwei koaxialen Drehknöpfen 3 und 4 ausgestattet ist, wobei die Drehknöpfen 3, 4 nicht gegeneinander verdrehbar sind. Das heißt sie sind ausschließlich gemeinsam ohne Winkelversatz zueinander um die Achse 5 drehbar.

Beide Drehknöpfe 3, 4 sind auf einer gemeinsamen Welle (zeichnerisch nicht dargestellt) angeordnet und über diese Welle mit nur einem Drehwinkelgeber verbunden. Außerdem ist ein in ig. 1a symbolisch dargestellter Annäherungsschalter 6 vorhanden, der ebenso wie der Drehwinkelgeber mit der Ansteuerschaltung verbunden ist.

Der Drehwinkelgeber ist zeichnerisch nicht dargestellt. Drehwinkelgeber sind aus dem Stand der Technik bekannt und bedürfen daher einschließlich ihrer mechanischen Ankopplung an einen Drehknopf an sich keiner näheren Erläuterung.

Das betrifft ebenso die Verbindung von Drehwinkelgebern mit einer Ansteuerschaltung, die Verbindung der Ansteuerschaltung mit einem Antriebsmotor, die Verbindung des Antriebsmotors über mechanische Getriebeglieder mit dem Fokussierelement des Mikroskops, dessen Position verstellt werden muss, um die Fokusposition relativ zu einer zu beobachtenden Probe zu ändern mit dem Ziel, eine Probe oder einen Probenabschnitt scharf für das Auge eines Betrachters sichtbar oder scharf auf eine Empfangseinrichtung abzubilden. Ein solches Fokussierelement kann je nach Art und Ausführung des Mikroskops beispielsweise das Mikroskopobjektiv, ein Objektivrevolver, der Probentisch, eine Tubuslinse oder ein Zwischentubus sein.

Der Annäherungsschalter 6 spricht bei dem in Fig. 1a gezeigten Abstand der Hand 7 des Bedieners vom Drehknopf 4, dem der Annäherungsschalter hier beispielhaft zugeordnet ist, nicht an. Die Ansteuerschaltung ist so ausgelegt, dass bei nicht ansprechendem Annäherungsschalter 6 in Abhängigkeit von dem mit beiden Drehknöpfen 3, 4 vorgegebenen Drehwinkel eine Feinverstellung der Fokusposition relativ zu der zu beobachtenden Probe ausgelöst wird.

Bei der in Fig. 1b gezeigten Handposition dagegen löst die Ansteuerschaltung in Abhängigkeit von dem mit den beiden Drehknöpfen 3, 4 vorgegebenen Drehwinkel eine Grobverstellung der Fokusposition relativ zu der zu beobachtenden Probe aus.

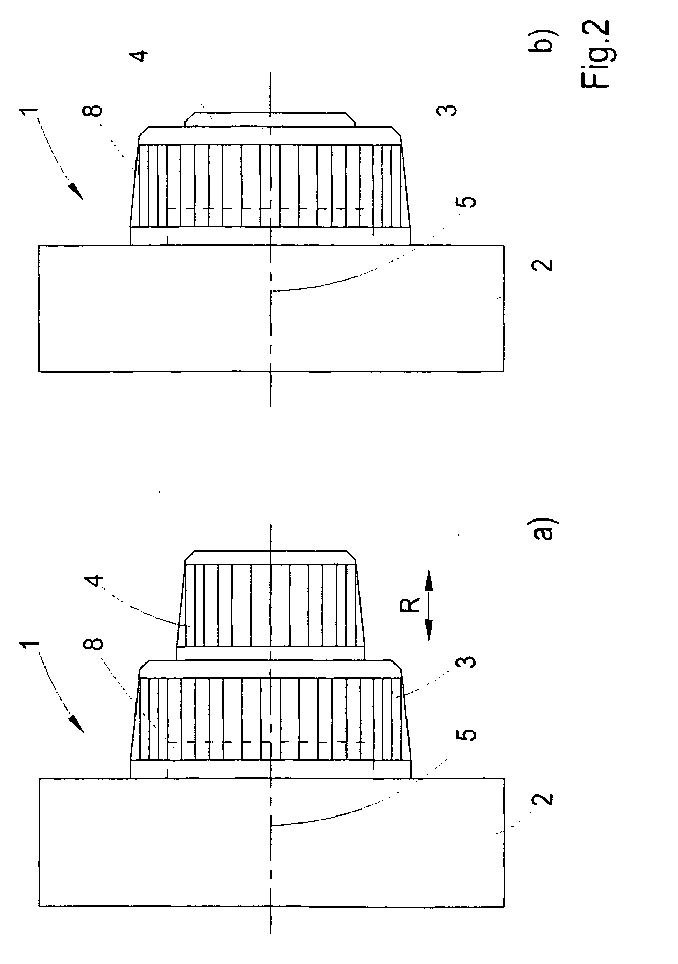

Fig.2 zeigt eine am Mikroskopstativ 2 angeordnete Bedieneinrichtung 1, die wiederum mit zwei koaxialen Drehknöpfen 3 und 4 ausgestattet ist. Auch hier sind, wie bei der Lösungsvariante nach Fig. 1, die Drehknöpfen 3, 4 nicht gegeneinander, sondern ausschließlich gemeinsam ohne Winkelversatz zueinander um die Achse 5 drehbar und diesbezüglich auf einer gemeinsamen Welle befestigt. Über diese Welle stehen die Drehknöpfe 3, 4 mit einem Drehwinkelgeber in Verbindung.

Im Unterschied zu der Lösungsvariante nach Fig. 1 ist der Drehknopf 4 zusätzlich axial in Richtung R verschiebbar, und zwar bis in zwei Endlagen, von denen eine Endlage in Fig.2a und die zweite in Fig.2b dargestellt ist.

In die Bedieneinrichtung 1 ist ein Endlagenschalter 8 integriert, der ebenso wie der Drehwinkelgeber mit einer Ansteuerschaltung verbunden ist.

Der Endlagenschalter 8 wird bei der in Fig.2a gezeigten Position des Drehknopfes 3 nicht betätigt, und die Ansteuerschaltung ist so ausgelegt, dass bei nicht betätigtem Endlagenschalter 8 in Abhängigkeit von dem mit den beiden Drehknöpfen 3, 4 vorgegebenen Drehwinkel eine Feinverstellung der Fokusposition relativ zu der zu beobachtenden Probe ausgelöst wird.

Wird dagegen mit der Hand 7 des Bedieners der Drehknopf 4 in Richtung R verschoben und erreicht dabei die in Fig.2b gezeichnete Endlage, wird der Endlagenschalter 8 betätigt und gibt ein Umschaltsignal an die Ansteuerschaltung aus. Die Ansteuerschaltung ist so ausgelegt, dass bei Anliegen dieses Umschaltsignals in Abhängigkeit von einem mit den beiden Drehknöpfen 3, 4 vorgegebenen Drehwinkel eine Grobverstellung der Fokusposition relativ zu der zu beobachtenden Probe ausgelöst wird.

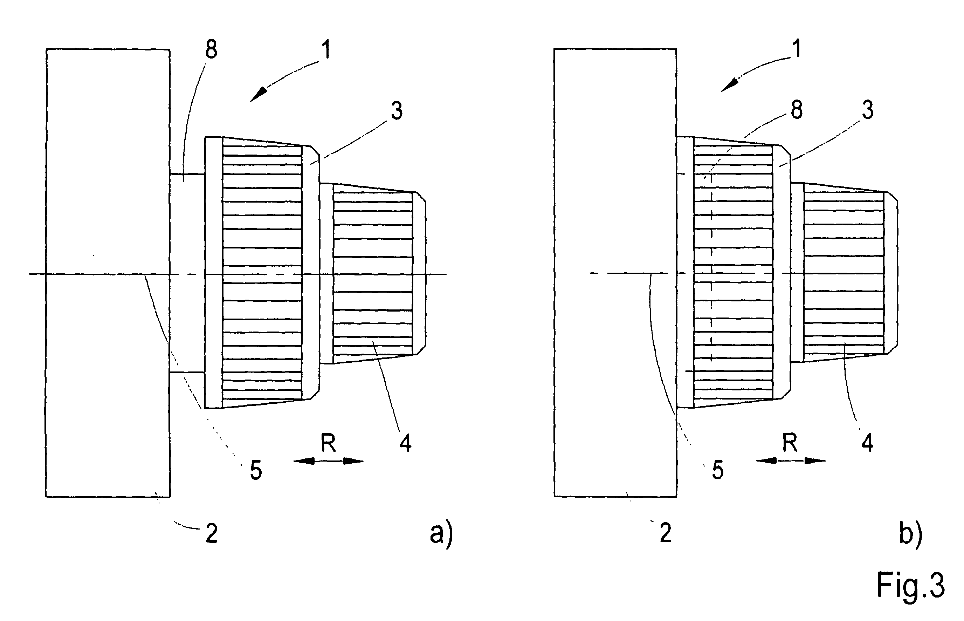

Die anhand von Fig.2 erläuterte Lösungsvariante kann beispielhaft auch wie in Fig.3 gezeigt ausgestaltet sein. Hier sind beide Drehknöpfe 3, 4 axial in Richtung R verschiebbar, wobei mit der manuellen Verschiebung beider Drehknöpfe 3, 4 von der in Fig.3a gezeigten Endlage in die in Fig.3b gezeigte Endlage die Betätigung des Endlagenschalters 8 und mit dieser Axialverschiebung eine Umschaltung zwischen Fein- und Grobfokussierung ausgelöst wird.

In den Ausführungsbeispielen nach Fig.2 und Fig.3 kann vorteilhaft eine Rückstellfeder in die Bedieneinrichtung integriert sein, die eine Rückstellung des einen Drehknopfes (Fig.2) bzw. beider Drehknöpfe (Fig.3) in die Ausgangsendlage bewirkt.

### Bezugszeichenliste

- 1: Bedieneinrichtung
- 2: Mikroskopstativ
- 3, 4: Drehknöpfe
- 5: Drehachse
- 6: Annäherungsschalter
- 7: Hand
- 8: Endlagenschalter

- R: Richtung

## Patentansprüche

1. Bedieneinrichtung für den Fokussiertrieb eines Mikroskops, umfassend
- als Drehknöpfe (3, 4) ausgebildete Bedienelemente zur Aufnahme der Bewegung der Finger oder der Hand (7) eines Bedieners,
- Mittel zur Übertragung der Drehbewegung der Drehknöpfe (3, 4) auf einen Drehwinkelgeber,
- eine mit dem Drehwinkelgeber in Verbindung stehende Ansteuerschaltung für einen Antriebsmotor,
- Getriebeglieder zur Wandlung der Antriebsbewegung des Antriebsmotors in eine Verstellbewegung zur Änderung der Fokusposition relativ zu einer zu beobachtenden Probe,
- wobei beide Drehknöpfe (3, 4) in Bezug auf ihre Drehachse (5) koaxial und gegeneinander nicht verdrehbar auf einer gemeinsamen Welle angeordnet und über diese Welle mit dem Drehwinkelgeber verbunden sind,
- ein mit der Ansteuerschaltung in Verbindung stehender und durch Berühren oder Bewegen eines oder beider Drehknöpfe (3, 4) zu betätigender Umschalter vorgesehen ist, wobei
- die Ansteuerschaltung so ausgelegt ist, dass sie in Abhängigkeit von dem mit beiden Drehknöpfen (3, 4) vorgegebenen Drehwinkel und in Abhängigkeit von der Betätigung des Umschalters eine Grob- oder Feinverstellung der Fokusposition relativ zu der zu beobachtenden Probe generiert,
- der Umschalter als Annäherungsschalter (6) ausgebildet und an einem der beiden Drehknöpfe (3, 4) angeordnet ist,
- so dass bei einem geringeren Abstand einer Hand (7) oder von Fingern der Hand (7) von diesem Drehknopf (3, 4) die Ansteuerschaltung in Abhängigkeit von einem mit den beiden Drehknöpfen (3, 4) vorgegebenen Drehwinkel eine Grobverstellung der Fokusposition relativ zu einer zu beobachtenden Probe generiert und
- bei einem größeren Abstand der Hand (7) oder der Finger einer Hand (7) von diesem Drehknopf (3, 4) die Ansteuerschaltung in Abhängigkeit von dem mit beiden Drehknöpfen (3, 4) vorgegebenen Drehwinkel eine Feinverstellung der Fokusposition relativ zu der zu beobachtenden Probe generiert.

2. Bedieneinrichtung nach Anspruch 1, bei welcher der Annäherungsschalter (6) dem Drehknopf (4) zugeordnet und die Ansteuerschaltung so ausgelegt ist, dass beim Überdecken des Drehknopfes (4) mit der Hand (7) oder mit Fingern der Hand (7) die Ansteuerschaltung in Abhängigkeit von einem mit beiden Drehknöpfen (3, 4) vorgegebenen Drehwinkel eine Grobverstellung der Fokusposition generiert.

3. Bedieneinrichtung nach einem der vorgenannten Ansprüche, bei der die beiden Drehknöpfe (3, 4) mit unterschiedlichen Durchmessern ausgeführt sind, wobei der Drehknopf (4) mit kleinerem Durchmesser der Feinverstellung und der Drehknopf (3) mit größerem Durchmesser der Grobverstellung zugeordnet ist.

4. Bedieneinrichtung nach einem der vorgenannten Ansprüche,
- ausgebildet als separate, vom Mikroskopstativ (2) losgelöste und damit neben dem Mikroskop frei positionierbare Baugruppe, wobei diese Baugruppe die beiden Drehknöpfe (3, 4) und den mindestens einen Drehwinkelgeber umfasst, während die Ansteuerschaltung, der Antriebsmotor und die Getriebeglieder im Mikroskopstativ (2) untergebracht sind, oder
- fest oder beliebig variabel an einem vorgegebenen Ort am Mikroskop angeordnet, während die Ansteuerschaltung, der Antriebsmotor und die Getriebeglieder im Mikroskopstativ (2) untergebracht sind.

5. Bedieneinrichtung nach Anspruch 4, wobei drahtgebundene und/oder drahtlose Signalübertragungen zwischen der Ansteuerschaltung und dem Antriebsmotor vorgesehen sind.

6. Bedieneinrichtung nach Anspruch 5, wobei drahtgebundene Signalübertragungen vorgesehen und diese über Steckverbinder bei Bedarf herstellbar und wieder auftrennbar sind.

## Claims

1. Operating device for the focusing operation of a microscope, comprising
- operating elements designed as rotary knobs (3, 4) and intended for picking up the movement of the fingers or the hand (7) of an operator,
- means for transmitting the rotary movement of the rotary knobs (3, 4) to a rotation angle sensor,
- a drive circuit, connected to the rotation angle sensor, for a drive motor,
- gear elements for converting the drive movement of the drive motor into an adjusting movement for changing the focal position relative to a sample to be observed,
and in the case of which
- the two rotary knobs (3, 4) are arranged on a common shaft coaxially with reference to their rotational axis (5) and such that they cannot be rotated relative to one another and are connected via this shaft to the rotation angle sensor,
- a changeover switch is provided which is connected to the drive circuit and is to be activated by touching or moving one or both rotary knobs (3, 4),
- the control circuit being designed such that it generates a coarse or fine adjustment of the focal position relative to the sample to be observed as a function of the rotation angle prescribed by two rotary knobs (3, 4) and is a function of the actuation of the changeover switch,
- the changeover switch is designed as a proximity switch (6) and is arranged on one of the two rotary knobs (3, 4),
- such that, given a comparatively slight spacing of a hand (7) or the fingers of the hand (7) from this rotary knob (3, 4), the drive circuit generates a coarse adjustment of the focal position relative to a sample to be observed as a function of the rotation angle prescribed with the aid of the two rotary knobs (3, 4), and
- given a comparatively large spacing of the hand (7) or the fingers of the hand (7) from this rotary knob (3, 4), the drive circuit generates a fine adjustment of the focal position relative to the sample to be observed as a function of the rotation angle prescribed by the two rotary knobs (3, 4).

2. Operating device according to Claim 1, in which the proximity switch (6) is assigned to the rotary knob (4), and the drive circuit is designed such that if the rotary knob (4) is covered by the hand (7) or the fingers of the hand (7) the drive circuit generates a coarse adjustment of the focal position as a function of a rotation angle prescribed by the two rotary knobs (3, 4).

3. Operating device according to one of the preceding claims, in which the two rotary knobs (3, 4) are designed with different diameters, the rotary knob (4) of smaller diameter being assigned to the fine adjustment, and the rotary knob (3) of greater diameter being assigned to the coarse adjustment.

4. Operating device according to one of the preceding claims,
- which is designed as a separate module detached from the microscope stand (2) and thus able to be freely positioned next to the microscope, said module comprising the two rotary knobs (3, 4) and at least one rotation angle sensor, while the drive circuit, the drive motor and the gear elements are accommodated in the microscope stand (2), or
- which is arranged in a fixed or arbitrarilly variable fashion at a prescribed location on the microscope, while the drive circuit, the drive motor and the gear elements are accommodated in the microscope stand (2).

5. Operating device according to Claim 4, in which hard-wired and/or wireless signal transmissions are provided between the drive circuit and the drive motor.

6. Operating device according to Claim 5, in which hard-wired signal transmissions are provided and the latter can, if required, be produced and interrupted again via plug connectors.

## Revendications

1. Dispositif de commande pour le mécanisme de focalisation d'un microscope comprenant
- des éléments de commande développés sous la forme de boutons rotatifs (3, 4) pour enregistrer le mouvement des doigts ou de la main (7) d'un opérateur,
- des moyens pour la transmission du mouvement de rotation des boutons rotatifs (3, 4) sur un capteur angulaire de rotation,
- un circuit de commande en liaison avec le capteur angulaire de rotation pour un moteur d'entraînement,
- des éléments de transmission pour la conversion du mouvement d'entraînement du moteur d'entraînement en un mouvement de réglage pour la modification de la position de focalisation par rapport à un échantillon à observer,
- les deux boutons rotatifs (3, 4) étant disposés sur un arbre commun de manière coaxiale et mutuellement rigide par rapport à leur axe de rotation (5), et étant reliés par l'intermédiaire de cet arbre au capteur angulaire de rotation,
- un commutateur en liaison avec le circuit de commande et pouvant être actionné par toucher ou par mouvement d'un ou des deux boutons rotatifs (3, 4) est prévu,
- le circuit de commande étant réalisé de telle sorte qu'il génère un réglage grossier ou un réglage fin de la position de focalisation par rapport à l'échantillon à observer, en fonction de l'angle de rotation défini avec les deux boutons rotatifs (3, 4) et en fonction de l'action sur le commutateur,
- le commutateur est réalisé sous la forme d'un commutateur de proximité (6) et est disposé sur un des deux boutons rotatifs (3, 4),
- de telle sorte qu'une faible distance entre une main (7) ou des doigts de la main (7) et ce bouton rotatif (3, 4) engendre la génération par le circuit de commande d'un réglage grossier de la position de focalisation par rapport à un échantillon à observer, en fonction d'un angle de rotation défini avec les deux boutons rotatifs (3, 4) et
- qu'une distance plus grande entre la main (7) ou les doigts de la main (7) et ce bouton rotatif (3, 4) engendre la génération par le circuit de commande d'un réglage fin de la position de focalisation par rapport à l'échantillon à observer, en fonction de l'angle de rotation défini avec les deux boutons rotatifs (3, 4).

2. Dispositif de commande selon la revendication 1, dans lequel le commutateur de proximité (6) est affecté au bouton rotatif (4) et dans lequel le circuit de commande est réalisé de telle sorte que le fait de recouvrir le bouton rotatif (4) avec la main (7) ou avec des doigts de la main (7) engendre la génération par le circuit de commande d'un réglage grossier de la position de focalisation, en fonction d'un angle de rotation défini avec les deux boutons rotatifs (3, 4).

3. Dispositif de commande selon une des revendications précédentes, dans lequel les deux boutons rotatifs (3, 4) sont réalisés avec des diamètres différents, le bouton rotatif (4) de plus petit diamètre étant affecté au réglage fin et le bouton rotatif (3) de plus grand diamètre étant affecté au réglage grossier.

4. Dispositif de commande selon une des revendications précédentes,
- réalisé sous la forme d'un module séparé, détaché du pied du microscope (2) et pouvant ainsi se placer librement à côté du microscope, ce module comportant les deux boutons rotatifs (3, 4) et l'au moins un capteur angulaire de rotation, alors que le circuit de commande, le moteur d'entraînement et les éléments de transmission sont logés dans le pied du microscope (2), ou
- disposé de manière fixe ou de manière arbitrairement variable sur un endroit défini du microscope, alors que le circuit de commande, le moteur d'entraînement et les éléments de transmission sont logés dans le pied du microscope (2).

5. Dispositif de commande selon la revendication 4, dans lequel on a prévu des transmissions de signaux par fils et/ou sans fils entre le circuit de commande et le moteur d'entraînement.

6. Dispositif de commande selon la revendication 5, dans lequel on a prévu des transmissions de signaux par fils, celles-ci pouvant être établies et à nouveau coupées selon les besoins par le truchement de connecteurs enfichables.
